# EUROPÄISCHE PATENTSCHRIFT

(11) **EP 1 695 879 B1**
(45) Veröffentlichungstag und Bekanntmachung des Hinweises auf die Patenterteilung: **06.06.2007**
(21) Anmeldenummer: 05004068.2
(22) Anmeldetag: 24.02.2005
(51) Int. Cl.: B60R 21/20

(54) **Verfahren zum Herstellen eines Luftsackmoduls und ein solches Luftsackmodul**
Method of assembling an airbag module and such an airbag module
Procédé d'assemblage d'un module d'airbag et tel module d'airbag

(43) Veröffentlichungstag der Anmeldung: 30.08.2006
(73) Patentinhaber: Delphi Technologies, Inc., Troy, MI 48007 (US)
(72) Erfinder: Burczyk, Christian, 10115 Berlin (DE); Hannemann, Jens, 13127 Berlin (DE); Crohn, Detlef, 13158 Berlin (DE)
(74) Vertreter: Manitz, Finsterwald & Partner GbR

(56) Entgegenhaltungen:
- EP-A- 1 293 397
- DE-A1- 19 845 721
- US-A1- 2003 045 418

## Beschreibung

Die Erfindung betrifft ein Verfahren zum Herstellen eines Luftsackmoduls für ein Kraftfahrzeug, bei dem ein, insbesondere ringförmiger, Luftsackhalter, an dessen einer Seite ein Luftsack, insbesondere in Form eines zusammengefalteten Luftsackpakets, angeordnet ist, an einem Modulgehäuse befestigt wird.

Bei einem bekannten Verfahren dieser Art wird der an einer Seite des Luftsackhalters angeordnete Luftsack mittels eines Packstempels in einem Faltkanal zu einem Luftsackpaket zusammengefaltet. Der gleiche Packstempel wird anschließend dazu verwendet, den Luftsackhalter zusammen mit dem Luftsackpaket in das Modulgehäuse hinein zu drücken und an diesem zu befestigen, beispielsweise zu verrasten. Die zur Befestigung des Luftsackhalters an dem Modulgehäuse erforderliche Kraft wird dabei also durch den Packstempel über das Luftsackpaket auf den Luftsackhalter ausgeübt. Dies kann zu einer Beschädigung des zwischen dem Packstempel und dem Luftsackhalter befindlichen, zusammengefalteten Luftsacks führen.

Ein Verfahren gemäß dem Oberbegriff des Anspruchs 1 ist aus der US 2003/0045418 A 1 bekannt. Ähnliche Verfahren sind auch in der EP-A-1 293 397 und der DE 198 45 721 A1 beschrieben.

Der Erfindung liegt daher die Aufgabe zugrunde, ein Verfahren zum Herstellen eines Luftsackmoduls für ein Kraftfahrzeug zu schaffen, bei welchem eine Beschädigung des Luftsacks vermieden wird.

Die Aufgabe wird erfindungsgemäß durch ein Verfahren mit den Merkmalen des Anspruchs 1 und insbesondere dadurch gelöst, dass die zur Befestigung erforderliche Kraft an einer dem Luftsack abgewandten Seite des Luftsackhalters auf den Luftsackhalter ausgeübt wird und eine Zugkraft auf den Luftsackhalter ausgeübt wird, um den Luftsackhalter in Richtung eines Befestigungsabschnitts des Modulgehäuses zu ziehen.

Die zur Befestigung des Luftsackhalters an dem Modulgehäuse aufzubringende Kraft wird also nicht an derjenigen Seite, an der sich der Luftsack befindet, sondern an der gegenüberliegenden Seite auf den Luftsackhalter ausgeübt. Dadurch wirken beim Befestigen des Luftsackhalters an dem Modulgehäuse keine Kräfte auf den Luftsack ein, die zu einer Beschädigung des Luftsacks führen könnten.

Insbesondere wird der Luftsack beim Befestigen des Luftsackhalters an dem Modulgehäuse nicht durch ein Druckmittel, beispielsweise einen Packstempel, beaufschlagt, um den Luftsackhalter an das Modulgehäuse anzudrücken. Auf diese Weise kann eine Beschädigung des Luftsacks beim Befestigen des Luftsackhalters an dem Modulgehäuse wirksam vermieden werden.

Der Luftsackhalter wird also nicht in das Modulgehäuse hinein- und an den Befestigungsabschnitt angedrückt, um beispielsweise eine Rastverbindung zwischen dem Luftsackhalter und dem Befestigungsabschnitt zu schaffen, sondern er wird in Richtung des Befestigungsabschnitts gezogen. Die Verwendung einer Zugkraft ermöglicht es, zur Befestigung des Luftsackhalters an dem Modulgehäuse auf die Seite des Luftsackhalters einzuwirken, die dem zusammengefalteten Luftsackpaket gerzenüberlielkt. Somit wird eine Beaufschlagung des Luftsacks mit einer den Luftsack möglicherweise beschädigenden Einrichtung beim Befestigen des Luftsackhalters an dem Modulgehäuse umgangen.

Als gleichbedeutend mit dem Ziehen des Luftsackhalters in Richtung des Befestigungsabschnitts wird eine entsprechende Relativbewegung zwischen Luftsackhalter und Befestigungsabschnitt angesehen, bei welcher der Luftsackhalter festgehalten wird und statt dessen das Modulgehäuse auf oder über den Luftsackhalter geschoben wird, bzw. - allgemein ausgedrückt - bei welcher der Befestigungsabschnitt des Modulgehäuses in Richtung des Luftsackhalters bewegt wird.

Gemäß einer bevorzugten Ausbildung des erfindungsgemäßen Verfahrens wird der Luftsackhalter mittels einer Rastverbindung an dem Modulgehäuse befestigt. Die Rastverbindung ermöglicht eine besonders einfache Befestigung des Luftsackhalters an dem Modulgehäuse. Dadurch lässt sich das Luftsackmodul besonders schnell und kostengünstig herstellen.

Da die Verrastung von Luftsackhalter und Modulgehäuse die Ausübung einer gewissen Mindestkraft auf den Luftsackhalter erfordert, erweist es sich bei dieser Art der Verbindung von Luftsackhalter und Modulgehäuse als besonders vorteilhaft, dass die für die Befestigung des Luftsackhalters an dem Modulgehäuse aufzubringende Kraft nicht über das Luftsackpaket auf den Luftsackhalter ausgeübt wird, sondern an der dem zusammengefalteten Luftsack abgewandten Seite des Luftsackhalters auf diesen einwirkt. Auf diese Weise wird eine Beschädigung des Luftsacks während der Verrastung von Luftsackhalter und Modulgehäuse wirksam vermieden.

Die Zugkraft kann auf wenigstens ein Zugmittel des Luftsackhalters ein wirken, welches z.B. einen Haken oder eine Öse umfasst. Dies ermöglicht eine besonders einfache Ankopplung einer Zugvorrichtung an das Zugmittel und somit eine besonders schnelle und sichere Befestigung des Luftsackhalters an dem Modulgehäuse.

Besonders vorteilhaft ist es, wenn das Zugmittel des Luftsackhalters durch ein Rastelement des Luftsackhalters gebildet oder mit dem Rastelement verbunden ist und sich insbesondere in Zugrichtung an dieses anschließt. Das Rastelement erfüllt eine Doppelfunktion, indem es zum einen die Verrastung des Luftsackhalters an dem Modulgehäuse ermöglicht und zum anderen das Hineinziehen des Luftsackhalters in das Modulgehäuse bzw. das Ziehen des Luftsackhalters in Richtung eines Befestigungsabschnitts des Modulgehäuses erleichtert. Dadurch lässt sich das Luftsackmodul noch einfacher und kostengünstiger herstellen.

Bevorzugt wird der Luftsackhalter bei einer Bewegung relativ zu einem Befestigungsabschnitt des Modulgehäuses durch wenigstens ein Zugmittel geführt. Durch die Führung des Luftsackhalters in dem Modulgehäuse wird eine korrekte Befestigung des Luftsackhalters an dem Modulgehäuse erleichtert. Auch das Zugmittel erfüllt somit eine Doppelfunktion, indem es zum einen als Zugmittel und zum anderen als Führungsmittel dient. Dies vereinfacht den Aufbau des Luftsackmoduls und ermöglicht eine noch kostengünstigere Herstellung des Luftsackmoduls.

Ein sich in Zugrichtung erstreckender länglicher Führungsabschnitt wenigstens eines Zugmittels kann sich zumindest zeitweise durch eine Öffnung eines Befestigungsabschnitts des Luftsackhalters bewegen. Der Befestigungsabschnitt dient folglich nicht nur zur Befestigung des Luftsackhalters an dem Modulgehäuse, sondern er bildet gleichzeitig auch eine Führung für das Zugmittel und somit für den Luftsackhalter insgesamt. Auf diese Weise ist nicht nur eine kontrollierte Bewegung des Luftsackhalters in dem Modulgehäuse sichergestellt, sondern es wird durch die Doppelfunktion des Befestigungsabschnitts auch der Aufbau des Luftsackmoduls vereinfacht. Dadurch ist eine noch schnellere und kostengünstigere Herstellung des Luftsackmoduls möglich.

Vorzugsweise dient die Öffnung zusätzlich zum Befestigen und insbesondere Verrasten des Luftsackhalters. Dadurch, dass die Öffnung des Befestigungsabschnitts nicht nur als Führung für das Zugmittel, sondern auch zur Befestigung des Luftsackhalters an dem Modulgehäuse dient und somit eine Doppelfunktion erfüllt, ist der Aufbau des Luftsackmoduls noch weiter vereinfacht und eine noch schnellere und kostengünstigere Herstellung des Luftsackmoduls möglich.

Besonders vorteilhaft ist es, wenn das oder jedes Zugmittel nach Befestigung des Luftsackhalters am Modulgehäuse entfernt wird und insbesondere an einer, z.B. im Bereich eines zugehörigen Rastelements vorgesehenen Sollbruchstelle abgebrochen wird. Das Zugmittel ist mit anderen Worten lediglich ein temporäres Hilfsmittel, welches nach Erfüllung seines Zwecks entfernt wird. Dadurch steht das Zugmittel nach Befestigung des Luftsackhalters am Modulgehäuse nicht störend von dem Modulgehäuse ab. Das Luftsackmodul weist im Endmontagezustand also eine minimale Baugröße auf.

Wie bereits erwähnt wurde, kann der Luftsackhalter zusammen mit dem Luftsack in das Modulgehäuse hineingezogen werden oder das Modulgehäuse auf oder über einen festgehaltenen Luftsackhalter und den Luftsack geschoben werden. Beide Varianten werden als gleichwertig angesehen. Im Ergebnis kommt es darauf an, dass der Luftsackhalter und das Modulgehäuse bei der Befestigung des Luftsackhalters am Modulgehäuse eine Relativbewegung ausführen, bei welcher sich der Luftsackhalter und ein Befestigungsabschnitt des Modulgehäuses aufeinander zu bewegen, wobei eine zu dieser Relativbewegung beitragende Kraft nicht über das Luftsackpaket auf den Luftsackhalter, sondern auf die dem Luftsack abgewandte Seite des Luftsackhalters einwirkt.

Weiterer Gegenstand der Erfindung ist außerdem ein Luftsackhalter für ein Kraftfahrzeug-Luftsackmodul mit wenigstens einem Befestigungsmittel, insbesondere Rastelement, zum Befestigen des Luftsackhalters an einem Modulgehäuse und mit wenigstens einem Zugmittel, um den Luftsackhalter zum Befestigen an dem Modulgehäuse in Richtung eines Befestigungsabschnitts des Modulgehäuses zu ziehen.

Der erfindungsgemäße Luftsackhalter ermöglicht es, die zum Befestigen des Luftsackhalters an dem Modulgehäuse aufzubringende Kraft an einer Seite des Luftsackhalters auszuüben, die einem an dem Luftsackhalter angebrachten zusammengefalteten Luftsackpaket gegenüberliegt. Mit Hilfe des Zugmittels kann der Luftsackhalter zu seiner Befestigung an dem Modulgehäuse in das Modulgehäuse hineingezogen werden, ohne dass dabei ein mit dem Luftsackhalter verbundener Luftsack mit einer Einrichtung beaufschlagt wird, die zu einer Beschädigung des Luftsacks führen könnte.

Alternativ ermöglicht es das Zugmittel, den Luftsackhalter festzuhalten und das Modulgehäuse zur Verbindung mit dem Luftsackhalter auf oder über diesen zu schieben.

Gemäß einer vorteilhaften Ausführungsform des Luftsackhalters sind das Befestigungsmittel und das Zugmittel an einer Seite des Luftsackhalters vorgesehen, die einer Seite gegenüberliegt, an der im zusammengesetzten Zustand ein durch den Luftsackhalter gehaltener Luftsack angeordnet ist. Dies ermöglicht eine besonders luftsackschonende Befestigung des Luftsackhalters an dem Modulgehäuse.

Das Zugmittel kann zu dem Befestigungsmittel beabstandet sein.

Bevorzugt ist das Zugmittel jedoch an ein Befestigungsmittel angeformt. Ist das Befestigungsmittel beispielsweise ein Rastelement und weist ein Befestigungsabschnitt des Modulgehäuses eine entsprechende Rastöffnung auf, so kann sich das an das Rastelement angeformte Zugmittel bei einer Bewegung des Luftsackhalters relativ zu dem Befestigungsabschnitt zumindest zeitweise durch die Rastöffnung des Befestigungsabschnitts hindurch bewegen. Der Befestigungsabschnitt und das Zugmittel bilden auf diese Weise eine Führung für den Luftsackhalter, durch welche eine korrekte Befestigung des Luftsackhalters an dem Modulgehäuse erleichtert wird.

Das Zugmittel kann einen sich in Zugrichtung erstreckenden länglichen Führungsabschnitt aufweisen. Dadurch wird eine Führung des Luftsackhalters in dem Modulgehäuse über einen weiten Bereich der Relativbewegung zwischen Luftsackhalter und Modulgehäuse erreicht.

Nachfolgend wird die Erfindung rein beispielhaft anhand bevorzugter Ausführungsformen unter Bezugnahme auf die Zeichnung beschrieben. Es zeigen:
- Fig. 1: eine Querschnittsansicht eines erfindungsgemäßen Luftsackhalters mit einem daran angebrachten zusammengefalteten Luftsack vor dem Einbringen in ein Luftsackmodulgehäuse; und
- Fig. 2: eine Querschnittsansicht einer alternativen Ausführungsform eines erfindungsgemäßen Luftsackhalters.

Zur Herstellung eines Luftsackmoduls für ein Kraftfahrzeug wird ein Luftsack 10 an einem Luftsackhalter 12 angebracht, welcher bei dem vorliegenden Ausführungsbeispiel ringförmig ausgebildet ist.

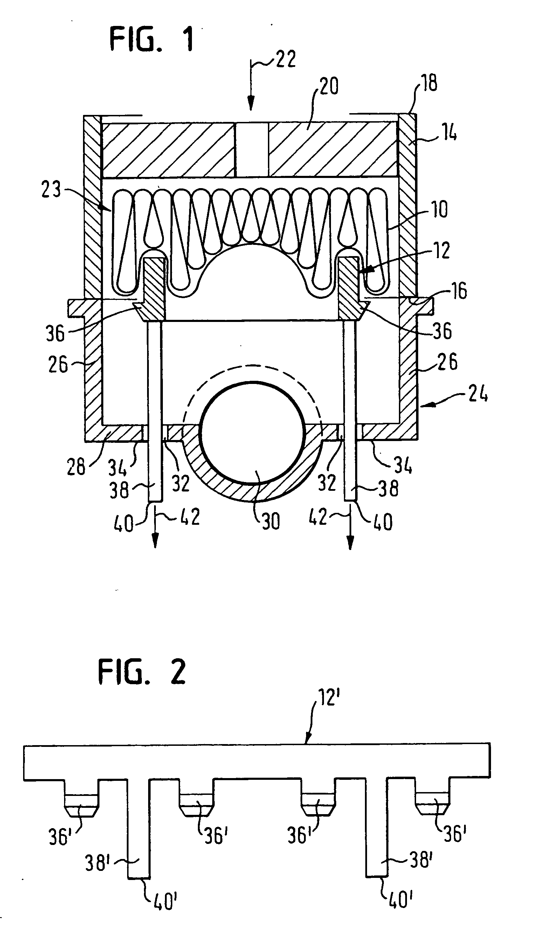

Wie in Fig. 1 dargestellt ist, wird der Luftsackhalter 12 in einen hohlzylindrisch ausgebildeten Faltkanal 14 eingebracht, der an seinen axialen Enden 16, 18 offen ist. Der Luftsackhalter 12 wird im Bereich des einen, in Fig. 1 unteren, axialen Endes 16 derart bezüglich des Faltkanals 14 fixiert, dass sich der Luftsack 10 im Inneren des Faltkanals 14 befindet und sich in Richtung des anderen, in Fig. 1 oberen, axialen Endes 18 des Faltkanals 14 erstreckt.

Am oberen axialen Ende 18 des Faltkanals 14 wird ein Packstempel 20 in den Faltkanal 14 eingeführt, dessen Querschnitt an den Querschnitt des Faltkanals 14 angepasst ist. Ausgehend von dem oberen axialen Ende 18 wird der Packstempel 20 in Richtung des unteren axialen Endes 16 bewegt, wie durch den Pfeil 22 angedeutet ist, um den im Faltkanal 14 befindlichen Luftsack 10 zusammenzuschieben. Dadurch wird der Luftsack 10 zu einem Luftsackpaket 23 zusammengefaltet.

Um den Luftsackhalter 12 zusammen mit dem Luftsackpaket 23 in ein Luftsackmodulgehäuse 24 einzusetzen, wird der Faltkanal 14 nach dem Zusammenfalten des Luftsacks 10 zusammen mit dem Luftsackhalter 12 und dem Luftsackpaket 23 im Bereich einer offenen Seite des Modulgehäuses 24 positioniert oder auf dieses aufgesetzt, wie es in Fig. 1 dargestellt ist.

Alternativ ist es auch möglich, den Faltkanal 14 zuerst auf das Modulgehäuse 24 aufzusetzen und danach den Packstempel 20 zum Zusammenfalten des Luftsacks 10 zu betätigen.

Das Modulgehäuse 24 weist bei dem vorliegenden Ausführungsbeispiel eine Kappen- oder Becherform auf und umfasst eine zylindrische Seitenwand 26 sowie einen Boden 28. Im Bereich der Mitte des Modulgehäusebodens 28 ist ein Gasgenerator 30 angeordnet, der im Falle einer Aktivierung des Luftsackmoduls bei einem Unfall den Luftsack 10 aufbläst.

Um den Gasgenerator 30 herum sind im Boden 28 des Modulgehäuses 24 mehrere Öffnungen 32 entlang einer der Geometrie des Moduls entsprechenden Bahn angeordnet, welche mit dem ringförmigen Luftsackhalter 12 ausgerichtet ist.

Die Aussparungen 32 dienen als Rastöffnungen zur Befestigung des Luftsackhalters 12 am Modulgehäuse 24. Der an die Öffnungen 32 angrenzende Abschnitt des Modulgehäusebodens 28 wird deshalb als Befestigungsabschnitt 34 bezeichnet.

Wie in Fig. 1 zu erkennen ist, weist der Luftsackhalter 12 an seiner vom Luftsackpaket 23 wegweisenden Seite, in Fig. 1 also an seiner Unterseite, mehrere Rasthaken 36 auf, deren Anzahl und Anordnung an die der Rastöffnungen 32 im Modulgehäuseboden 28 angepasst sind.

An dem freien, d.h. in Fig. 1 also unteren, Ende jedes Hakens 36 ist eine Zugstange 38 angeformt, an deren freiem Ende 40 jeweils ein nicht gezeigter Haken oder eine nicht gezeigte Öse vorgesehen ist.

Der Durchmesser der Zugstangen 38 ist kleiner als der Durchmesser der Öffnungen 32 im Modulgehäuseboden 28, so dass sich die Zugstangen 38 durch die Rastöffnungen 32 hindurchbewegen können. Die Länge der Zugstangen 38 ist so gewählt, dass sich die Zugstangen 38 bereits dann durch die Öffnungen 32 hindurch erstrecken, wenn der Faltkanal 14 mitsamt dem Luftsackhalter 12 und Luftsack 10 auf das Modulgehäuse 24 aufgesetzt ist, der Luftsackhalter 12 und das Luftsackpaket 23 aber noch nicht in das Modulgehäuse 24 eingeführt sind.

Um den Luftsackhalter 12 und das Luftsackpaket 23 aus dem Faltkanal 14 in das Modulgehäuse 24 zu bringen, wird der Luftsackhalter 12 mit Hilfe der Zugstangen 38 in das Modulgehäuse 24 hineingezogen. Dabei kann entweder manuell an den Zugstangen 38 gezogen werden, oder es kann eine entsprechende Zugvorrichtung vorgesehen sein, die über die Haken bzw. Ösen der Zugstangen 38 an diese ankoppelt wird. Die Zugrichtung ist in Fig. 1 durch die Pfeile 42 angedeutet.

Während der Luftsackhalter 12 in Richtung des Befestigungsabschnitts 34 des Modulgehäusebodens 28 gezogen wird, wird der Packstempel 20 entsprechend nachgeführt, d.h. in axialer Richtung 22 verschoben, um ein unbeabsichtigtes Entfalten des Luftsackpakets zu verhindern. Eine zur Verschiebung des Luftsackhalters 12 beitragende Kraft wird durch den Packstempel 20 aber nicht ausgeübt.

Die Zugkraft wird solange auf den Luftsackhalter 12 ausgeübt, bis sich die Rasthaken 36 durch die Rastöffnungen 32 hindurch bewegt haben und hinter dem Befestigungsabschnitt 34 des Modulgehäusebodens 28 eingerastet sind.

Nachdem der Luftsackhalter 12 auf diese Weise am Modulgehäuse 24 verankert wurde, kann der Faltkanal 14 entfernt und das Modulgehäuse 24 durch eine geeignete, nicht gezeigte Abdeckung verschlossen werden.

Außerdem können die Zugstangen 38 nach der Verrastung von Luftsackhalter 12 und Modulgehäuse 24 abgebrochen werden, um die Baugröße des zusammengesetzten Luftsackmoduls zu minimieren. Um das Abbrechen der Zugstangen 38 zu erleichtern, kann im Bereich des Übergangs von Rasthaken 36 zu Zugstange 38 jeweils eine Sollbruchstelle vorgesehen sein.

Während die Zugstangen 38 des in Fig. 1 gezeigten Luftsackhalters 12 aus den Rasthaken 36 des Luftsackhalters 12 hervorgehen oder an diese angeformt sind, zeigt Fig. 2 einen Luftsackhalter 12', bei dem die Zugstangen 38' und die Rasthaken 36' zueinander beabstandet sind. Jede Zugstange 38' ist mit anderen Worten jeweils zwischen zwei Rasthaken 36' angeordnet.

Zur Befestigung des in Fig. 2 gezeigten Luftsackhalters 12' an dem Modulgehäuse 24 sind neben den Rastöffnungen 32 für die Rasthaken 36 folglich zusätzliche Öffnungen für die Zugstangen 38 im Modulgehäuseboden 28 vorgesehen.

### Bezugszeichenliste

- 10: Luftsack
- 12: Luftsackhalter
- 14: Faltkanal
- 16: axiales Ende
- 18: axiales Ende
- 20: Packstempel
- 22: Richtung
- 23: Luftsackpaket
- 24: Modulgehäuse
- 26: Seitenwand
- 28: Modulgehäuseboden
- 30: Gasgenerator
- 32: Rastöffnung
- 34: Befestigungsabschnitt
- 36: Rasthaken
- 38: Zugstange
- 40: freies Ende
- 42: Zugrichtung

## Patentansprüche

1. Verfahren zum Herstellen eines Luftsackmoduls für ein Kraftfahrzeug, bei dem ein insbesondere ringförmiger Luftsackhalter (12), an dessen einer Seite ein Luftsack (10) insbesondere in Form eines zusammengefalteten Luftsackpakets (23) angeordnet ist, an einem Modulgehäuse (24) befestigt wird, wobei die zur Befestigung erforderliche Kraft an einer dem Luftsack (10) abgewandten Seite des Luftsackhalters (12) auf den Luftsackhalter (12) ausgeübt wird,
**dadurch gekennzeichnet, dass**
eine Zugkraft auf den Luftsackhalter (12) ausgeübt wird, um den Luftsackhalter (12) in Richtung eines Befestigungsabschnitts (34) des Modulgehäuses (24) zu ziehen.

2. Verfahren nach Anspruch 1,
**dadurch gekennzeichnet, dass**
der Luftsackhalter (12) mit einer Rastverbindung an dem Modulgehäuse (24) befestigt wird.

3. Verfahren nach einem der vorherigen Ansprüche,
**dadurch gekennzeichnet, dass**
die Zugkraft auf wenigstens ein Zugmittel (38) des Luftsackhalters (12) einwirkt, welches z.B. einen Haken oder eine Öse umfasst.

4. Verfahren nach Anspruch 3,
**dadurch gekennzeichnet, dass**
das Zugmittel (38) des Luftsackhalters (12) durch ein Rastelement (36) des Luftsackhalters (12) gebildet oder mit dem Rastelement (36) verbunden ist und sich insbesondere in Zugrichtung (42) an dieses anschließt.

5. Verfahren nach einem der vorherigen Ansprüche,
**dadurch gekennzeichnet, dass**
der Luftsackhalter (12) bei einer Bewegung relativ zu einem Befestigungsabschnitt (34) des Modulgehäuses (24) durch wenigstens ein Zugmittel (38) geführt wird.

6. Verfahren nach einem der vorherigen Ansprüche,
**dadurch gekennzeichnet, dass**
sich ein in Zugrichtung (42) erstreckender länglicher Führungsabschnitt wenigstens eines Zugmittels (38) zumindest zeitweise durch eine Öffnung (32) eines Befestigungsabschnitts (34) des Modulgehäuses (24) bewegt.

7. Verfahren nach Anspruch 6,
**dadurch gekennzeichnet, dass**
die Öffnung (32) zusätzlich zum Befestigen und insbesondere Verrasten des Luftsackhalters (12) dient.

8. Verfahren nach einem der Ansprüche 3 bis 7,
**dadurch gekennzeichnet, dass**
das oder jedes Zugmittel (38) nach Befestigung des Luftsackhalters (12) am Modulgehäuse (24) entfernt wird und insbesondere an einer, z.B. im Bereich eines zugehörigen Rastelements (36) vorgesehenen, Sollbruchstelle abgebrochen wird.

9. Verfahren nach einem der vorherigen Ansprüche,
**dadurch gekennzeichnet, dass**
der Luftsackhalter (12) zusammen mit dem Luftsack (10) in das Modulgehäuse (24) hineingezogen wird oder das Modulgehäuse (24) auf oder über einen festgehaltenen Luftsackhalter (12) und den Luftsack (10) geschoben wird.

10. Luftsackhalter (12) für ein Kraftfahrzeug-Luftsackmodul mit wenigstens einem Befestigungsmittel (36), insbesondere Rastelement, zum Befestigen des Luftsackhalters (12) an einem Modulgehäuse (24) und mit wenigstens einem Zugmittel (38), um den Luftsackhalter (12) zum Befestigen an dem Modulgehäuse (24) in Richtung eines Befestigungsabschnitts (34) des Modulgehäuses (24) zu ziehen.

11. Luftsackhalter (12) nach Anspruch 10,
**dadurch gekennzeichnet, dass**
das Befestigungsmittel (36) und das Zugmittel (38) an einer Seite des Luftsackhalters (12) vorgesehen sind, die einer Seite gegenüberliegt, an der im zusammengesetzten Zustand ein durch den Luftsackhalter (12) gehaltener Luftsack (10) angeordnet ist.

12. Luftsackhalter (12) nach Anspruch 10 oder 11,
**dadurch gekennzeichnet, dass**
das Zugmittel (38) zu dem Befestigungsmittel (36) beabstandet ist.

13. Luftsackhalter (12) nach Anspruch 10 oder 11,
**dadurch gekennzeichnet, dass**
das Zugmittel (38) an ein Befestigungsmittel (36) angeformt ist.

14. Luftsackhalter (12) nach einem der Ansprüche 10 bis 13,
**dadurch gekennzeichnet, dass**
das Zugmittel (38) einen sich in Zugrichtung (42) erstreckenden länglichen Führungsabschnitt aufweist.

## Claims

1. A method of manufacturing an airbag module for a motor vehicle in which an airbag holder (12), in particular a ring-shaped airbag holder, at whose one side an airbag (10) is arranged, in particular in the form of a folded airbag packet (23), is secured to a module housing (24), with the force required for the securing being exerted onto the airbag holder (12) at a side of the airbag holder (12) remote from the airbag (10),
**characterized in that** a pulling force is exerted on the airbag holder (12) to pull the airbag holder (12) in the direction of a securing section (34) of the module housing (24).

2. A method in accordance with claim 1, **characterized in that** the airbag holder (12) is secured to the module housing (24) by a latch connection.

3. A method in accordance with any one of the preceding claims,
**characterized in that** the pulling force acts on at least one pulling means (38) of the airbag holder (12) which includes e.g. a hook or an eye.

4. A method in accordance with claim 3, **characterized in that** the pulling means (38) of the airbag holder (12) is formed by a latch element (36) of the airbag holder (12) or is connected to the latch element (36) and in particular adjoins it in the pulling direction (42).

5. A method in accordance with any one of the preceding claims,
**characterized in that** the airbag holder (12) is guided by at least one pulling means (38) on a movement relative to a securing section (34) of the module housing (24).

6. A method in accordance with any one of the preceding claims,
**characterized in that** an elongate guidance section of at least one pulling means (38) extending in the pulling direction (42) moves through an opening (32) of a securing section (34) of the module housing (24) at least at times.

7. A method in accordance with claim 6, **characterized in that** the opening (32) additionally serves for the securing, and in particular for the latching, of the airbag holder (12).

8. A method in accordance with any one of the claims 3 to 7,
**characterized in that** the or each pulling means (38 is removed after the securing of the airbag holder (12) to the module housing (24) and is in particular broken off at a desired break point provided e.g. in the region of an associated latch element (36).

9. A method in accordance with any one of the preceding claims,
**characterized in that** the airbag holder (12) is pulled into the module housing (24) together with the airbag (10) or the module housing (24) is pushed onto or over an airbag holder (12) held tight and the airbag (10).

10. An airbag holder (12) for a motor vehicle airbag module having at least one securing means (36), in particular a latch element, for securing the airbag holder (12) to a module housing (24) and having at least one pulling means (38) to pull the airbag holder (12) in the direction of a securing section (34) of the module housing (24) for securing to the module housing (24).

11. An airbag holder (12) in accordance with claim 10, **characterized in that** the securing means (36) and the pulling means (38) are provided at a side of the airbag holder (12) which is opposite a side at which an airbag (10) held by the airbag holder (12) is arranged in the assembled state.

12. An airbag holder (12) in accordance with claim 10 or claim 11,
**characterized in that** the pulling means (38) is spaced apart from the securing means (36).

13. An airbag holder (12) in accordance with claim 10 or claim 11,
**characterized in that** the pulling means (38) is shaped on a securing means (36).

14. An airbag holder (12) in accordance with any one of the claims 10 to 13, **characterized in that** the pulling means (38) has an elongate guidance section extending in the pulling direction (42).

## Revendications

1. Procédé de fabrication d'un module de sac gonflable pour un véhicule automobile, dans lequel un support de sac gonflable en particulier annulaire (12), sur un côté duquel est agencé un sac gonflable (10) en particulier sous la forme d'un ensemble de sac gonflable plié (23), est fixé à un logement de module (24), où la force nécessaire à la fixation à un côté tourné vers le sac gonflable (10) du support de sac gonflable (12) est exercée sur le support de sac gonflable (12),
**caractérisé en ce que**,
une force de traction est exercée sur le support de sac gonflable (12), pour tirer le support de sac gonflable (12) dans une direction d'une partie de fixation (34) du logement de module (24).

2. Procédé selon la revendication 1, **caractérisé en ce que**,
le support de sac gonflable (12) est fixé avec un raccord à encliquetage au logement de module (24).

3. Procédé selon l'une des revendications précédentes, **caractérisé en ce que**,
la force de traction agit sur au moins un moyen de traction (38) du support de sac gonflable (12), lequel comprend par exemple un crochet ou une boucle.

4. Procédé selon la revendication 3, **caractérisé en ce que**,
le moyen de traction (38) du support de sac gonflable (12) est formé par un élément à encliquetage (36) du support de sac gonflable (12) ou est relié avec l'élément à encliquetage (36) et se raccorde à celui-ci en particulier dans la direction de traction (42).

5. Procédé selon l'une des revendications précédentes, **caractérisé en ce que**,
le support de sac gonflable (12) est guidé par un mouvement par rapport à une partie de fixation (34) du logement de module (24) par au moins un moyen de traction (38).

6. Procédé selon l'une des revendications précédentes, **caractérisé en ce que**,
une partie de guidage allongée s'étendant dans la direction de traction (42) d'au moins un moyen de traction (38) se déplace au moins temporairement par une ouverture (32) d'une partie de fixation (34) du logement de module (24).

7. Procédé selon la revendication 6, **caractérisé en ce que**,
l'ouverture (32) sert en outre de fixation et en particulier de raccord à encliquetage du support de sac gonflable (12).

8. Procédé selon l'une des revendications 3 à 7, **caractérisé en ce que**,
le ou chaque moyen de traction (38) est éliminé après la fixation du support de sac gonflable (12) au logement de module (24) et en particulier cassé à un point de rupture prédéterminé par exemple, dans une région d'un élément à encliquetage correspondant (36).

9. Procédé selon l'une des revendications précédentes, **caractérisé en ce que**,
le support de sac gonflable (12) est tiré conjointement avec le sac gonflable (10) dans le logement de module (24) ou le logement de module (24) est poussé vers ou sur un support de sac gonflable fixé (12) et le sac gonflable (10).

10. Support de sac gonflable (12) pour un module de sac gonflable de véhicule automobile avec au moins un moyen de fixation (36), en particulier un élément à encliquetage, pour fixer le support de sac gonflable (12) à un logement de module (24) et avec au moins un moyen de traction (38), pour tirer le support de sac gonflable (12) à fixer au logement de module (24) dans la direction d'une partie de fixation (34) du logement de module (24).

11. Support de sac gonflable (12) selon la revendication 10, **caractérisé en ce que**,
le moyen de fixation (36) et le moyen de traction (38) sont prévus à un côté du support de sac gonflable (12), qui fait face à un côté, dans lequel est agencé le sac gonflable (10) dans un état assemblé retenu par le support de sac gonflable (12).

12. Support de sac gonflable (12) selon la revendication 10 ou 11, **caractérisé en ce que**,
le moyen de traction (38) est éloigné du moyen de fixation (36).

13. Support de sac gonflable (12) selon la revendication 10 ou 11, **caractérisé en ce que**,
le moyen de traction (38) est de la forme d'un moyen de fixation (36).

14. Support de sac gonflable (12) selon l'une des revendications 10 à 13, **caractérisé en ce que**,
le moyen de traction (38) présente une partie de guidage allongée s'étendant dans la direction de traction (42).
